# EUROPÄISCHE PATENTANMELDUNG

(11) **EP 1 484 877 A2**
(43) Veröffentlichungstag der Anmeldung: **08.12.2004**
(21) Anmeldenummer: 04012857.1
(22) Anmeldetag: 01.06.2004
(51) Int. Cl.: H04L 25/03

(54) **Trennung von erwünschten Funksignalen von Gleichkanalstörungen**

(30) Priorität: 06.06.2003 DE 10326104
(71) Anmelder: DaimlerChrysler AG, 70567 Stuttgart (DE)
(72) Erfinder: Müller, Thomas, 89075 Ulm (DE); Eireiner, Thomas, 86754 Laub (DE)

(57) **Zusammenfassung**

Die Erfindung betrifft eine Empfangsvorrichtung für Funksignale mit einer Antenneneinheit, einer Kanaltrennungseinheit und einer mit der Kanaltrennungseinheit verbundenen Steuereinheit, die geeignet ist, ein CMA-Verfahren zur Trennung von erwünschten Funksignalen von Gleichkanalstörungen anzuwenden, wobei die Steuereinheit geeignet ist, unter Verwendung des CMA-Verfahrens Gleichkanalstörungen zu unterdrücken, die nicht auf Aussendungen derjenigen Signalquelle zurückgehen, welche die erwünschten Signale aussendet.

## Beschreibung

Die Erfindung betrifft eine Vorrichtung und ein Verfahren zum Empfang von Funksignalen zur Unterdrückung von Störeinflüssen.
Eine verbreitete Problematik der Übertragung von Funksignalen besteht darin, dass die Funksignale oftmals sogenannten Gleichkanalstörungen unterliegen.
Dies resultiert daraus, dass Übertragungen von Aussendungen in einem bestimmten Frequenzbereich Störungen durch unerwünschte Signale ausgesetzt sind, die im selben Frequenzbereich, d. h. im gleichen Kanal, auftreten.
Eine häufig anzutreffende Störungsquelle besteht beispielsweise darin, dass die Aussendungen einer Signalquelle einen Empfänger auf unterschiedlichen Wegen erreichen.
Diese sogenannte Mehrwegeausbreitung rührt im wesentlichen daher, dass ein bestimmter Signalanteil den Empfänger auf direktem Weg erreicht, während andere Signalanteile aufgrund einer Reflexion beispielsweise an bestimmten Geländeformationen wie z. B. steil ansteigende Gebirgsflanken den Empfänger auf indirektem Weg und damit gegenüber dem direkt empfangenen Signal leicht verzögert erreichen. Die Überlagerung dieser beiden Signale resultiert in einer deutlich verminderten Empfangs- bzw. Wiedergabequalität.

Eine mögliche Lösung dieser Problematik besteht darin, das von der Signalquelle ursprünglich ausgesandte Signal mittels eines Signalaufbereitungsverfahrens zu rekonstruieren.
Üblicherweise werden hierzu sogenannte Entzerrer verwendet, die häufig als Filter wie beispielsweise FIR (Finite Impulse Response) realisiert sind. Dabei können die Filtereigenschaften gegebenenfalls dynamisch angepasst werden, wodurch ein adaptives Filter realisiert werden kann.
Eine weitere Möglichkeit zur Signalverbesserung besteht darin, die Eigenschaft vieler Hochfrequenzsignale auszunutzen, eine konstante Einhüllende (engl. Constant Modulus) zu besitzen. Das empfangene Signal wird dabei in der Weise aufbereitet, dass die durch die Störungen im Ausbreitungsweg hervorgerufenen Schwankungen der Signaleinhüllenden durch ein geeignetes Verfahren kompensiert werden und somit das ursprüngliche Signal rekonstruiert werden kann.
Potenzial und mögliche Anwendungen des dabei verwendeten CMA-(Constant Modulus Algorithm)Verfahrens zur Unterdrückung der durch Mehrwegeausbreitungen hervorgerufenen Störungen werden in der Diplomarbeit mit dem Titel "Untersuchung und Implementierung von Constant Modulus Algorithmen" (TU Dresden 1999; Michael Löhning) eingehend untersucht.
Ein wesentliches weiteres Problem bei heutigen Übertragungssystemen besteht jedoch auch darin, dass, aufgrund der Empfindlichkeit der Empfänger und eventueller atmosphärisch oder apparativ bedingter Überreichweiten Aussendungen aus unterschiedlichen Signalquellen auf denselben Frequenzen einen Empfänger erreichen und dort starke Störungen hervorrufen.

Der Erfindung liegt die Aufgabe zugrunde, eine Vorrichtung und ein Verfahren anzugeben, mit dem Störungen in empfangenen Funksignalen wirkungsvoll unterdrückt werden können.

Diese Aufgabe wird durch die Vorrichtungen mit den in den Ansprüchen 1, 8 aufgeführten Merkmalen und das Verfahren mit den im Anspruch 9 aufgeführten Merkmalen gelöst. Die Unteransprüche beziehen sich auf vorteilhafte Aus- und Weiterbildungen der Erfindung.

Die erfindungsgemäße Empfangsvorrichtung für Funksignale besitzt eine ihr zugeordnete Antenneneinheit sowie eine Kanaltrennungseinheit und eine damit verbundene Steuereinheit, die aus dem empfangenen und durch die Kanaltrennungseinheit weiterverarbeiteten Signal Parameter zur Steuerung der Kanaltrennungseinheit gewinnt und auf Basis dieser Parameter die Kanaltrennungseinheit steuert. Dabei ist die Steuereinheit geeignet, ein CMA-Verfahren zur Trennung von erwünschten Funksignalen von Gleichkanalstörungen anzuwenden. Insbesondere ist hierbei die Steuereinheit in der Weise ausgeführt, dass sie sich nicht nur dazu eignet, Störungen zu unterdrücken, die auf eine Mehrwegeausbreitung von Funksignalen zurückgehen, die von der selben Signalquelle stammen, sondern auch Funksignale anderer Signalquellen im selben Frequenzbereich wirkungsvoll aus dem empfangenen Funksignal auszufiltern.
Dabei zeigt die erfindungsgemäße Vorrichtung eine gegenüber konventionellen Empfangsvorrichtungen deutlich verbesserte Leistungsfähigkeit. Im Vergleich zu den durch Mehrwegeausbreitungen verursachten Störungen wirken sich beispielsweise durch Überreichweiten hervorgerufene Störeinflüsse deswegen besonders nachteilig aus, weil der Inhalt der Aussendungen massiv vom Inhalt des erwünschten Funksignals abweicht und die Störung dadurch wesentlich stärker wahrgenommen wird. Durch eine wirkungsvolle Unterdrückung dieser Störeinflüsse, die durch die erfindungsgemäße Empfangsvorrichtung besonders effektiv erreicht wird, wird die vom Benutzer wahrgenommene Signalqualität deutlich erhöht.

Es hat sich dabei besonders bewährt, als CMA-Verfahren ein sogenanntes normiertes CMA-Verfahren (NCMA) einzusetzen, das eine besonders effektive Trennung der erwünschten Signale von den Gleichkanalstörungen gewährleistet.

Eine vorteilhafte Ausprägung der Erfindung besteht darin, dass die Steuereinheit geeignet ist, die Signalqualität von empfangenen frequenzmodulierten Funksignalen zu verbessern. Frequenzmodulierte Funksignale finden beispielsweise im UKW-Rundfunk breite Verwendung. Aufgrund der konstanten Einhüllenden des frequenzmodulierten UKW-Signals ist dieses Funksignal der Aufbereitung durch ein CMA-Verfahren zugänglich. Hierdurch wird in vorteilhafter Weise der Problematik begegnet, das beispielsweise Autoradios in Kraftfahrzeugen oftmals aufgrund der z. B. durch Überreichweiten hervorgerufenen Gleichkanalstörungen, insbesondere durch Überlagerungen des gewünschten Funksignals mit Aussendungen anderer Sender, massiv gestört werden.
Aufgrund der gerade in dieser mobilen Anwendung typischerweise häufigen Ortswechsel der Empfangsvorrichtung ist eine effiziente Unterdrückung der obengenannten Gleichkanalstörungen in diesem Anwendungsgebiet von besonderem Interesse.

Besonders vorteilhaft ist es, bestimmte Signaleigenschaften des erwünschten Funksignals auszunutzen, um sicherzustellen, dass bei der Trennung der Kanäle insbesondere in einer mobilen Anwendung dauerhaft derselbe Funkkanal durch die Empfangsvorrichtung empfangen wird und die Steuereinheit die Kanaltrennungseinheit nicht in der Weise steuert, dass zu einem bestimmten Zeitpunkt fälschlicherweise das Funksignal einer störenden Signalquelle als gewünschtes Funksignals interpretiert und entsprechend aufbereitet wird. Dies würde in einem vom Benutzer nicht gewünschten abrupten Wechsel des empfangenen Senders resultieren.
Dabei können die Signaleigenschaften in vorteilhafter Weise dazu ausgenutzt werden, um das gewünschte Funksignal zu identifizieren und seine Aufbereitung durch die Empfangsvorrichtung dauerhaft sicherzustellen.
Hierdurch wird erreicht, das plötzliche Senderwechsel durch die Empfangsvorrichtung effizient unterbunden werden.

Zur Unterscheidung der verschiedenen Signale können insbesondere die Signaleigenschaften eines FM-Stereo-Multiplexsignals verwendet werden. Dieses Signal enthält die Stereoinformationen in der Weise, dass in einem Frequenzbereich von 0 bis 15 kHz das Summensignal aus dem rechten und dem linken Stereokanal und im Frequenzbereich zwischen 23 und 53 kHz das Differenzsignal der beiden Kanälen liegt. Durch Addition bzw. Differenzbildung dieser beiden Signale können in einem Stereoempfänger die Signale für den rechten bzw. linken Lautsprecher rekonstruiert werden. Allerdings ist für eine Rückgewinnung des Differenzsignals die Kenntnis der Phase notwendig. Hierzu wird üblicherweise ein sogenannter Pilotton bei 19kHz mit übertragen.
Die Phase des Multiplexsignals enthält somit eine für jeden Sender charakteristische Information. Diese kann in der erfindungsgemäßen Empfangsvorrichtung dazu verwendet werden, das erwünschte Funksignal zu identifizieren und somit einen kontinuierlichen, dauerhaften Empfang des gewünschten Senders auch bei Veränderung der Position der Empfangsvorrichtung zu gewährleisten.
Besonders vorteilhaft ist es hierbei, dass bereits im erwünschten Funksignal ohnehin enthaltene Informationen zur Verbesserung der Empfangsqualität verwendet werden können und damit keine senderseitigen Maßnahmen notwendig sind.

In analoger Weise kann zur Identifikation des erwünschten Funksignals die Phaseninformation des RDS-Signals verwendet werden.

Eine besonders einfache und damit kostengünstige Realisation der Kanaltrennungseinheit besteht darin, ein sogenanntes adaptives Filter zu verwenden. Diese Filter beruhen auf dem Prinzip, eingehende Signalanteile über Verzögerungsglieder gegeneinander zeitlich zu verschieben und nachfolgend gewichtet unter Verwendung von sogenannten Filterkoeffizienten, wieder zusammenzuführen. Hierdurch wird auf einfache Weise eine Entzerrung des Signals erreicht, wobei das CMA-Verfahren zur Bestimmung der Filterkoeffizienten verwendet wird.

Ebenso ist es von Vorteil, die Entzerrung im Raumbereich insbesondere über eine Realisation der Antenneneinheiten als Mehrantennensysteme mit mehreren Einzelantennen, sogenannten Antennenarrays, vorzunehmen.
Dabei weist die Kanaltrennungseinheit eine Gewichtungsvorrichtung auf, welche die von den Einzelantennen stammenden Signalanteile gewichtet und dadurch eine Änderung der Antennencharakteristik in der Weise erreicht, dass das erwünschte Signal durch die Charakteristik der Empfangseigenschaften des Antennenarrays wirksam von etwaigen Störeinflüssen getrennt wird.

Ein besonderer Vorteil liegt in der Realisation der Kanaltrennungseinheit als kombinierte Verwendung eines Antennenarrays und eines adaptiven Filters. Dabei werden beispielsweise die von dem Antennenarray stammenden, durch die Gewichtungsvorrichtung bereits aufbereiteten Signale dem adaptiven Filter zugeführt, durch den eine weitere Signalaufbereitung vorgenommen wird. Dabei ist es besonders vorteilhaft, die Steuereinheit so auszulegen, das durch sie sowohl der adaptive Filter als auch die Gewichtungsvorrichtungen gesteuert werden kann und der Eingang der Steuereinheit lediglich mit einem Koppelpunkt verbunden ist, welcher der Gewichtungsvorrichtung und dem adaptiven Filter nachgeschaltet ist.
Damit wird erreicht, dass dem in der Steuereinheit angewandten CMA-Verfahren lediglich das resultierende Ausgangssignal der Kombination aus dem adaptivem Filter und dem Antennenarray zugeführt werden muss. Die Steuereinheit generiert unter Verwendung dieses Signals unter Anwendung eines einzigen CMA-Verfahrens sowohl die Gewichtungsfaktoren für die Gewichtung der Signalanteile der einzelnen Antennen des Antennenarrays als auch die Filterkoeffizienten für den adaptiven Filter. Auf diese Weise lässt sich die erfindungsgemäße Empfangsvorrichtung ausgesprochen einfach und kostengünstig realisieren.

Die beschriebene Empfangsvorrichtung ist darüber hinaus besonders geeignet, in einem Multiple-In/Multiple-Out-(MIMO)Übertragungssystem verwendet zu werden.
Ein derartiges Übertragungssystemen macht sich den normalerweise störenden Effekt der Mehrwegeausbreitung dahingehend zu Nutze, dass die unterschiedlichen Ausbreitungswege der Funksignale als voneinander unabhängige Übertragungswege genutzt werden. Aufgrund ihrer bereits beschriebenen Vorzüge bei der Trennung verschiedener auf der selben Frequenz ist eine einfache Anwendung der erfindungsgemäßen Empfangsvorrichtung in einem MIMO-Übertragungssystem möglich.

Viele wesentliche Komponenten der vorstehend beschriebenen Empfangsvorrichtung lassen sich in einfacher Weise in Software realisieren. Dabei kann insbesondere die Software für das CMA-Verfahren in einem FPGA (Field Programmable Gate Array)implementiert werden. Dabei zeigt die Realisation in einem FPGA gegenüber der Verwendung eines digitalen Signalprozessors verschiedene Vorteile. So kann die verwendete Hardware beispielsweise auf die Aufgabenstellung optimiert und damit günstig realisiert werden. Beispielsweise ist es denkbar, eine modulare DSP (Digitaler Signalprozessor) Struktur in einen FPGA zu integrieren, wobei nur die notwendigen Befehle verwendet werden. Die modulare Struktur bietet die Möglichkeit, das verwendete Verfahren auf einfache Weise zu erweitern beziehungsweise zu verändern.

Die vorstehenden Erläuterungen zu den auf Vorrichtungen bezogenen Ansprüchen 1-8 gelten in analoger Weise für die Verfahrensansprüche 9-16.

Nachfolgend werden mögliche Ausführungsformen der Erfindung anhand zweier Zeichnungen beschrieben.
Dabei zeigen:
- Fig. 1: Ein Ausführungsbeispiel für ein Mehrantennensystem bei FM-Empfang
- Fig. 2: Ein Blockdiagramm zu Verdeutlichung der gemeinsamen Verwendung des CMA-Verfahrens zur Bestimmung der Filterkoeffizienten und Gewichtungsfaktoren

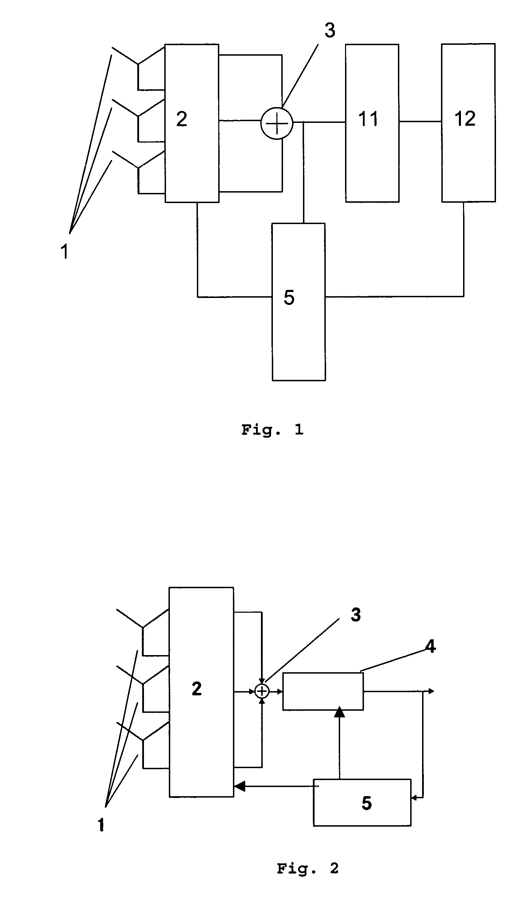

Fig. 1 zeigt eine Realisation der Erfindung in einem Mehrantennensystem für den Stereo-FM-Empfang unter Verwendung der Signaleigenschaften des Multiplexsignals. Dabei werden die Funksignale von dem Antennenarray 1 aufgenommen und der Gewichtungsvorrichtung 2 zugeleitet. Die Gewichtungsvorrichtung 2 ist mit dem Addierer 3 verbunden, in dem die gewichteten Signalanteile aufsummiert werden. Der Ausgang des Addierers 3 ist mit dem Eingang des Demodulators 11 verbunden, von dem die demodulierten Signale dem MPX-Decoder 12 zugeleitet werden, der aus dem demodulierten Signal die Stereoinformation unter Verwendung des Pilottons zurückgewinnt.

Die Steuereinheit 5 steuert die Gewichtungsvorrichtung 2 in der Weise, dass sie ihr die Gewichtungsfaktoren zuleitet, anhand derer die von den Einzelantennen stammenden Signale kombiniert werden.
Dem Eingang der Steuereinheit 5 werden einerseits Ausgangssignale des Addierers 3 und andererseits Ausgangssignale des MPX-Decoders 12 zugeführt und als Eingangsparameter für ein CMA-Verfahren verwendet. Da die Ausgangssignale des MPX-Decoders Informationen über die Phase des Pilottons enthalten, können diese in der Steuereinheit 5 verwendet werden, um zu gewährleisten, dass bei der Anwendung des CMA-Verfahrens nicht fälschlicherweise auf einen anderen Sender umgeschaltet wird.

Fig. 2 zeigt eine beispielhafte Realisierung einer gemeinsamen Verwendung des CMA Verfahrens. Dabei werden die Funksignale wie in Fig. 1 von dem Antennenarray 1 aufgenommen und der Gewichtungsvorrichtung 2 zugeleitet. Die Gewichtungsvorrichtung 2 leitet die mit m Gewichtungsfaktoren versehenen Signalanteile dem Addierer 3 zu, in dem die gewichteten Signalanteile wie bereits in Fig. 1 darstellt aufsummiert werden. Der Ausgang des Addierers 3 ist im Eingang des adaptiven Filters 4 verbunden. Der adaptive Filter 4 nimmt in einem weiteren Schritt unter Verwendung von n Filterkoeffizienten eine weitere Signalaufbereitung vor.
Der Ausgang des adaptiven Filters 4 ist mit dem Eingang der Steuereinheit 5 verbunden. Somit wird als Eingangsgröße für die Steuereinheit 5 das aus der Gewichtung mit anschließender adaptiver Filterung resultierende Signal verwendet. Aus diesem resultierenden Signal werden in der Steuereinheit 5 die n Filterkoeffizienten sowie die m Gewichtungsfaktoren mit ein und dem selben CMA-Verfahren berechnet und der Gewichtungsvorrichtung 2 bzw. dem adaptiven Filter 4 zugeleitet.

## Patentansprüche

1. Empfangsvorrichtung für Funksignale, der eine Antenneneinheit zugeordnet ist, mit einer Kanaltrennungseinheit und einer mit der Kanaltrennungseinheit verbundenen Steuereinheit, die geeignet ist, ein CMA-Verfahren zur Trennung von erwünschten Funksignalen von Gleichkanalstörungen anzuwenden,
**dadurch gekennzeichnet,**
**dass** die Steuereinheit geeignet ist, unter Verwendung des CMA-Verfahrens Gleichkanalstörungen zu unterdrücken, die nicht auf Aussendungen derjenigen Signalquelle zurückgehen, welche die erwünschten Signale aussendet.

2. Empfangsvorrichtung für Funksignale nach Anspruch 1
**dadurch gekennzeichnet,**
**dass** es sich bei den erwünschten Funksignalen um frequenzmodulierte oder phasenmodulierte Signale handelt.

3. Empfangsvorrichtung für Funksignale nach einem der vorangehenden Ansprüche,
**dadurch gekennzeichnet,**
**dass** die erwünschten Funksignale eine besondere Signaleigenschaft zeigen und die Steuereinheit geeignet ist, die erwünschten Funksignale anhand dieser Signaleigenschaft zu identifizieren.

4. Empfangsvorrichtung für Funksignale nach Anspruch 3,
**dadurch gekennzeichnet,**
**dass** es sich bei der Signaleigenschaft um die Phaseninformation des Pilottons eines FM-Stereo-Multiplexsignales oder um die Phaseninformation des RDS-Signals handelt.

5. Empfangsvorrichtung für Funksignale nach einem der vorangehenden Ansprüche
**dadurch gekennzeichnet,**
**dass** die Kanaltrennungseinheit ein adaptives Filter aufweist.

6. Empfangsvorrichtung für Funksignale nach einem der vorangehenden Ansprüche,
**dadurch gekennzeichnet,**
**dass** die Antenneneinheit mehrere Einzelantennen aufweist und die Kanaltrennungseinheit eine Gewichtungsvorrichtung zur Gewichtung der von den Einzelantennen stammenden Signalanteile aufweist.

7. Empfangsvorrichtung für Funksignale nach den Ansprüchen 5 und 6,
**dadurch gekennzeichnet,**
**dass** die Steuereinheit geeignet ist, sowohl den adaptiven Filter als auch die Gewichtungsvorrichtung zu steuern, wobei der Eingang der Steuereinheit lediglich mit einem Koppelpunkt verbunden ist, welcher der Gewichtungsvorrichtung und dem adaptiven Filter nachgeschaltet ist.

8. Multiple-In/Multiple-Out Übertragungssystem mit einer Empfangsvorrichtung für Funksignale nach einem der vorangehenden Ansprüche 1-7.

9. Verfahren zum Empfang von Funksignalen, wobei unter Verwendung eines CMA-Verfahrens aus einem Kanal erwünschte Funksignale selektiert und Gleichkanalstörungen unterdrückt werden
**dadurch gekennzeichnet,**
**dass** durch das Verfahren Gleichkanalstörungen unterdrückt werden, die nicht auf Aussendungen derjenigen Signalquelle zurückgehen, welche die erwünschten Signale aussendet.

10. Verfahren zum Empfang von Funksignalen nach Anspruch 9,
**dadurch gekennzeichnet,**
**dass** es sich bei den erwünschten Funksignalen um frequenzmodulierte oder phasenmodulierte Signale handelt.

11. Verfahren nach einem der vorangehenden Ansprüche 9 oder 10,
**dadurch gekennzeichnet,**
**dass** die erwünschten Funksignale besondere Signaleigenschaften aufweisen und anhand dieser Signaleigenschaften identifiziert werden können.

12. Verfahren nach Anspruch 11,
**dadurch gekennzeichnet,**
**dass** es sich bei der Signaleigenschaft um die Phaseninformation des Pilottons eines FM-Stereo-Multiplexsignales oder um die Phaseninformation des RDS-Signals handelt.

13. Verfahren nach einem der vorangehenden Ansprüche 9-12,
**dadurch gekennzeichnet,**
**dass** die Selektion der gewünschten Funksignale durch eine Filterung mittels eines adaptiven Filters erfolgt.

14. Verfahren nach einem der vorangehenden Ansprüche 10-14,
**dadurch gekennzeichnet,**
**dass** die Funksignale von verschiedenen Einzelantennen aufgenommen werden und zur Selektion der gewünschten Funksignale eine gesteuerte Gewichtung der Ausgangssignale der Einzelantennen erfolgt.

15. Verfahren nach den Ansprüchen 14 und 15,
**dadurch gekennzeichnet,**
**dass** die Steuerung der Filterung und der Gewichtung mittels eines einzigen CMA-Verfahrens erfolgt und die Eingangsparameter für das CMA-Verfahren aus dem aus der Filterung und der Gewichtung resultierenden Signal gewonnen werden.

16. Verfahren nach einem der vorangehenden Ansprüche 10-16,
**dadurch gekennzeichnet,**
**dass** das Verfahren geeignet ist, erwünschte Funksignale in einem Multiple-In/Multiple-Out-Übertragungssystem zu selektieren.
